# EUROPEAN PATENT APPLICATION

(11) **EP 1 473 714 A2**
(43) Date of publication of application: **03.11.2004**
(21) Application number: 03022936.3
(22) Date of filing: 09.10.2003
(51) Int. Cl.: G11B 7/0065

(54) **System for storing holographic digital data**

(30) Priority: 30.04.2003 KR 2003027589
(71) Applicant: Daewoo Electronics Corporation, Seoul 100-095 (KR)
(72) Inventor: Roh, Jae-Woo, Mapo-gu Seoul (KR)
(74) Representative: Jacoby, Georg, Dr.

(57) **Abstract**

A volume holographic digital data storage system includes a light source, a beam splitter, a spatial light modulator (SLM), a beam reducer including a beam transmission region and a beam absorption or reflection region, a first actuator, a first reflection mirror, a second reflection mirror, a first lens, a second actuator and a storage medium. By reducing the size of a reference beam through the use of the beam reducer and varying an incident location of the reference beam on the first lens by changing the positions of the beam reducer and the first or second reflection mirror, recording density of a holographic digital data storage system can be greatly increased.

## Description

The present invention relates to a volume holographic digital data storage system; and, more particularly, to a volume holographic digital data storage system capable of increasing recording density of holographic digital data.

As is well known, demands for a volume holographic digital data storage system that can store a large amount of data, such as data for a motion picture film, have been increasing. Therefore, various types of holographic digital data storage system have been recently developed for realizing high density optical storage capabilities.

The volume holographic digital data storage system allows a signal beam having information therein to interfere with a reference beam to generate an interference pattern therebetween and, then, controls the interference pattern to be stored in a storage medium made of an optical refractive crystal. The optical refractive crystal is a material which may react differently on different amplitudes and phases of the interference pattern.

Various holograms can be recorded in a same spatial location by changing the angle of incidence of the reference beam (angular multiplexing) and/or by moving a holographic medium to change a recording area (shift multiplexing), so that a great number of holograms of binary data can be stored in the storage medium on a page-by-page basis.

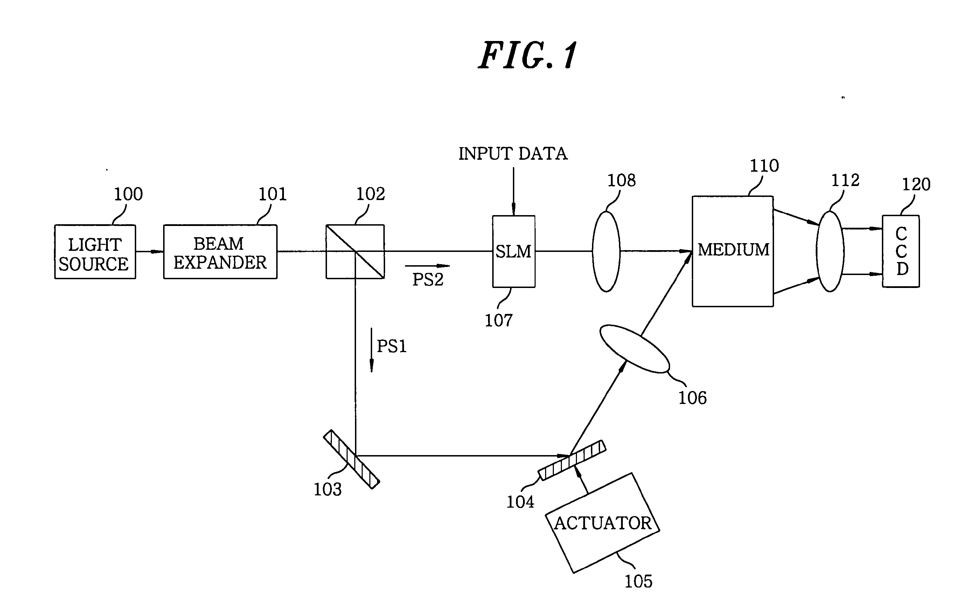

Hereinafter, a conventional holographic digital data storage system using the angular multiplexing technique will be described with reference to Fig. 1.

In Fig. 1, there is shown a block diagram of the conventional volume holographic digital data storage system for recording hologram data (i.e., interference patterns) in a three dimensional holographic storage medium.

The conventional volume holographic digital data storage system includes a light source 100 for generating a laser beam and a holographic medium 110 such as a photo-refractive crystal for storing therein hologram data.

A beam expander 101 expands the laser beam to provide a collimated laser beam of a plane wave having an increased diameter and sends the expanded laser beam to a beam splitter 102.

Between the beam splitter 102 and the holographic medium 110, there are formed two optical paths, i.e., a reference beam path PS1 and a signal beam path PS2. The beam splitter 102 separates the expanded laser beam into two beams, a reference beam reflected thereby along the reference beam path PS1 and a signal beam transmitted therethrough along the signal beam path PS2.

Prepared on the reference beam path PS1 are a first and a second reflection mirror 103, 104 and a first lens 106, disposed therealong in that order. Therefore, the reference beam to be used for recording or playing back hologram data into or from the holographic medium 110 travels from the beam splitter 102 to the holographic medium 110 via the first and the second reflection mirror 103, 104 and the first lens 106.

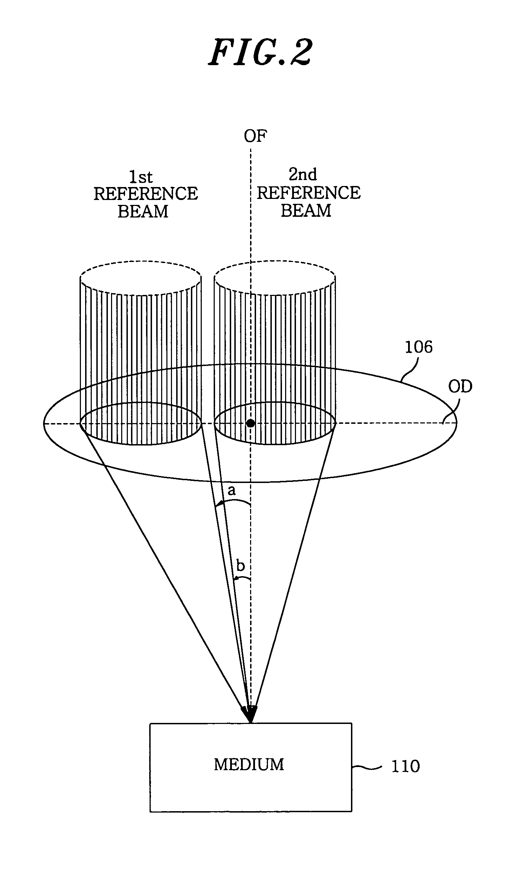

An actuator 105, e.g., imparts a translational motion to the second reflection mirror 104 to change an incident location of the reference beam on the first lens 106. Then, the reference beam reflected by the second reflection mirror 104 propagates toward the lens 106 parallel to the optical axis OF (Fig. 2) passing through two focal points thereof. By changing the incident location, a deflection angle of the reference beam, i.e., an angle between a propagation direction of the reflected reference beam toward the first lens 106 and a traveling direction of the deflected reference beam therefrom, is also changed. The change of the deflection angle corresponds to a change of an incident angle of the reference beam toward the holographic medium 110.

Meanwhile, an SLM (spatial light modulator) 107 and a second lens 108 are prepared on the signal beam path PS2 in a propagation direction of the signal beam.

At the SLM 107, the signal beam is modulated into binary pixel data on a page-by-page basis based on input data applied to the SLM 107. The modulated signal beam travels to the holographic medium 110 via the second lens 108.

In the holographic digital storage system employing the angular multiplexing technique, the hologram data, i.e., various interference patterns generated by the signal beams and the reference beams, are recorded at a same spot of location in the holographic medium 110 while varying the incident locations of the reference beams on the first lens 106 to avoid overlapping with each other, yielding different deflection angles of the reference beams.

During playback, only a reference beam, which is preferably identical to that employed during the recording operation, is irradiated into the holographic medium 110 from the first lens 106. The reference beam is diffracted by the interference pattern recorded in the holographic medium 110 so that the recorded binary data corresponding to an image to be displayed on a CCD (charge coupled device) 120 via a third lens 112 can be reproduced on the page-by-page basis.

As described above, in the holographic digital data storage system using the angular multiplexing technique, different interference patterns are recorded on the holographic medium by way of changing the deflection angle of the reference beam. As a result, a great amount of data can be recorded in a single location of a storage medium while being overlapped with each other.

Referring to Fig. 2, there is provided a drawing for describing an angular selectivity representing an extent of capability of distinguishing one page from another at an angular point of view. In the drawing, it is assumed for simplicity that two neighboring reference beams are projected onto the first lens 106 such that the centers of the two reference beams are disposed on a diametral line OD.

Suppose that ∠a is a first deflection angle among the range of deflection angle of a first reference beam and *∠b* is a second deflection angle among the range of deflection angle of a second reference beam with a difference |*∠a - ∠b*| being minimum, the difference |*∠a - ∠b*| should be greater than a given value to satisfy the angular selectivity in order for one page to be distinguished from another. Generally, neighboring incident locations of reference beams on the first lens 106 need to be spaced apart from each other by a certain degree for page separation.

However, in the above-mentioned holographic digital data storage system, the size of each laser beam is enlarged by the beam expander 101 since the SLM 107 requires each laser beam having a certain beam size to generate the binary pixel data. As a consequence, the size of each reference beam projected on the first lens 106 has a certain size given by the beam expander 101, limiting the number of reference beams which can be projected on the first lens 106 while satisfying the angular selectivity. Accordingly, it is impossible to increase the recording density of the storage medium beyond a certain extent in the conventional holographic digital data storage system.

It is, therefore, an object of the present invention to provide a holographic digital data storage system capable of increasing recording density of hologram data by reducing the size of a reference beam.

In accordance with a preferred embodiment of the present invention, there is provided a volume holographic digital data storage system comprising: a light source for generating a laser beam; a beam splitter for separating the laser beam into a signal beam and a reference beam; a spatial light modulator for modulating the signal beam into binary pixel data on a page-by-page basis based on data inputted from outside;a beam selecting means for transmitting a selected portion of the reference beam to thereby provide a reduced reference beam; a lens for deflecting the reduced reference beam into a storage medium; and a reflecting means for reflecting the reduced reference beam received from the iris toward an incident location on the lens.

The above and other objects and features of the present invention will become apparent from the following description of a preferred embodiment given in conjunction with the accompanying drawings, in which:
Fig. 1 is a block diagram of a conventional volume holographic digital data storage system;
Fig. 2 offers a drawing for describing two reference beams projecting onto a lens and an angular selectivity which should be satisfied between the two reference beams according to the conventional volume holographic digital data storage system;
Fig. 3 shows a block diagram of a volume holographic digital data storage system in accordance with a preferred embodiment of the present invention;
Fig. 4 presents a cross sectional view of a reference beam and all possible positions of a transmission region of an iris overlapped therewith in accordance with the preferred embodiment of the present invention; and
Fig. 5 represents a drawing for describing two reference beams projecting onto a lens and the angular selectivity which should be satisfied between the two reference beams in accordance with the preferred embodiment of the present invention.

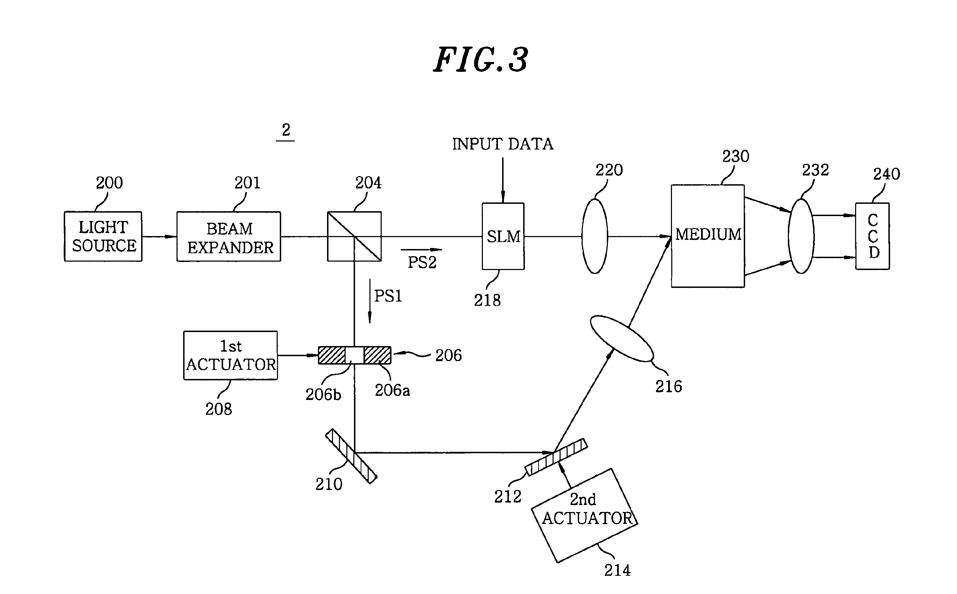

Referring to Fig. 3, there is provided a volume holographic digital data storage system 2 in accordance with a preferred embodiment of the present invention.

The storage system 2 of the present invention is generally identical to that of the prior art shown in Fig. 1, excepting an iris 206 and a first actuator 208 added thereto. The functions of the other parts of the storage system 2 except the iris 206 and the first actuator 208 are basically identical to those of the prior art.

The volume holographic digital data storage system 2 includes a light source 200 for emitting a laser beam and a holographic medium 230 such as photo-refractive crystal for storing therein hologram data.

A beam expander 201 expands the size of the laser beam emitted by the light source 200 and then sends the expanded laser beam to a beam splitter 204.

Between the beam splitter 204 and the holographic medium 230, there are formed two optical paths, i.e., a reference beam path PS1 and a signal beam path PS2. The beam splitter 204 splits the expanded laser beam into two beams, a reference beam reflected thereby along the reference beam path PS1 and a signal beam transmitted therethrough along the signal beam path PS2.

Prepared on the reference beam path PS1 are the iris (a beam reducer) 206, a first and a second reflection mirror 210, 212 and a first lens 216, disposed in that order therealong. That is, the reference beam travels to the holographic medium 230 via the iris 206, the first and the second reflection mirror 210, 212 and the first lens 216.

The iris 206 includes a transmission region 206b for allowing only a part of the reference beam to pass therethrough and a non-transmission region 206a for absorbing or reflecting the rest part of the reference beam. The iris 206 preferably has a circular shape and is provided with the transmission region 206b at the center thereof and the annular-shaped non-transmission region 206a therearound. Thus, the iris 206 serves to reduce the size of the reference beam.

Further, the iris 206 can be preferably moved, by the first actuator 208, on a two-dimensional plane, to which the propagation direction of the reference beam toward the first reflection mirror 210 is perpendicular, thereby changing a projecting position on the first reflection mirror 210 into which the reduced reference beam is projected. That is, by moving the position of the transmission region 206b, only a selected portion of the reference beam of a reduced size is permitted to be projected into the holographic medium 230 via the first and the second reflection mirror 210, 212 and the first lens 216.

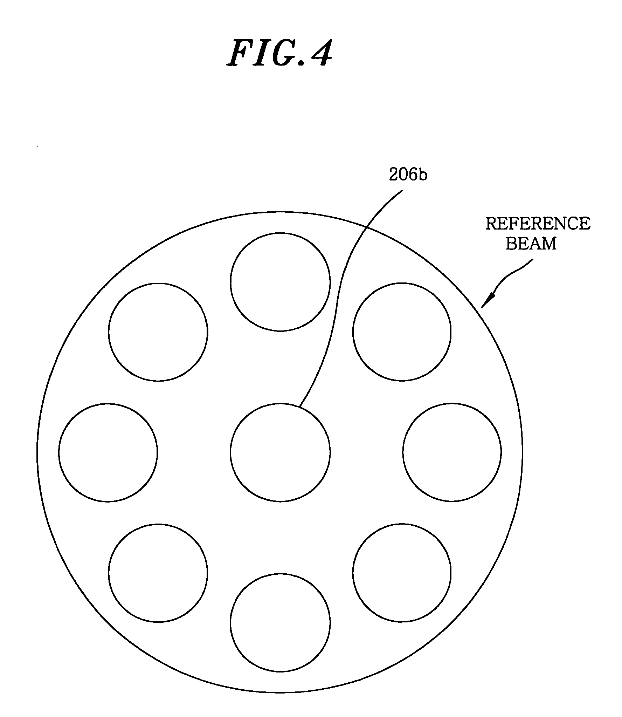

Fig. 4 illustrates an exemplary cross sectional view of the reference beam and various positions of the transmission region 206b overlapped therewith. The positions of the transmission region 206b correspond to the selected portions of the reference beam. For example, the number of the selected portions is 9 in Fig. 4. By reducing the size of the reference beam through the use of the iris 206, a recording density of the holographic medium 230 can be improved as will be described hereinafter.

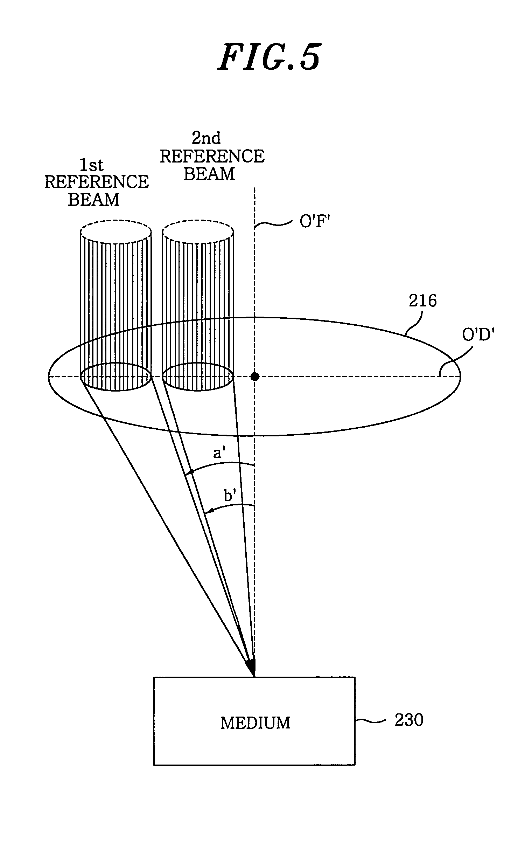

The first reflection mirror 210 reflects the reduced reference beam toward the second reflection mirror 212. Then, the second reflection mirror 212 serves to reflect the reduced reference beam received from the first reflection mirror 210 toward the first lens 216 in a fixed direction, preferably in a direction parallel to an optical axis O'F' (Fig. 5) of the first lens 216. The second reflection mirror 212 can be preferably translated by a second actuator 214, i.e., moved while maintaining incident angles of the reduced reference beams toward the first lens 216 to be unchanged, thereby adjusting incident locations on the first lens 216 to which the reduced reference beams are projected. The size of an incident location can be greatly diminished because the size of the reference beam is reduced due to the iris 206.

The first lens 216 deflects the reduced reference beam to be irradiated into the holographic medium 230. The incident location on the first lens 216 is varied by driving the first actuator 208 and the second actuator 214. Since the size of each incident location is greatly diminished and the neighboring incident locations on the first lens 216 need to be spaced apart from each other by a certain degree for page separation, the recording density on the holographic medium 230 is greatly increased.

On the signal beam path PS2, an SLM (spatial light modulator) 218 and a second lens 220 are successively installed in a proceeding direction of the signal beam. The SLM 218 modulates the signal beam transmitted from the beam splitter 204 into the binary pixel data on a page-by-page basis based on input data applied to the SLM 218. The modulated signal beam then travels to the holographic medium 230 via the second lens 220 to form an interference pattern therein.

During playback, reference beams, which are preferably identical to those employed during the recording operation, are irradiated into the holographic medium 230 from the first lens 216. Each reference beam is diffracted by the interference pattern recorded on the holographic medium 230 so that the recorded binary data corresponding to an image to be displayed on a CCD (charge coupled device) 240 via a third lens 232 can be reproduced on the page-by-page basis.

A process for changing an incident location of the reference beam by driving both the first actuator 208 and the second actuator 214 will be described in detail.

First, the iris 206 is fixed at a certain position to thereby fix the transmission region 206b thereof. The size of the reference beam propagating along the reference beam path PS1 is reduced while passing through the transmission region 206b and then reaches the first reflection mirror 210. Then, the reduced reference beam is reflected by the first reflection mirror 210 toward the second reflection mirror 212. The second reflection mirror 212 reflects the reduced reference beam received from the first reflection mirror 210 toward an incident location on the first lens 216. The first lens 216 deflects the reduced reference beam toward the holographic medium 230. The reference beam arriving at the holographic medium 230 interferes with the modulated signal beam to thereby generate an interference pattern. The interference pattern is recorded on the holographic medium 230.

Thereafter, the incident location of the reference beam on the first lens 216 is changed by moving the second reflection mirror 212 by using the second actuator 214 while maintaining the position of the transmission region 206b of the iris 206. The transmission region 206b is maintained at the current position until the movements of the second reflection mirror 212 are completed and then is moved by the first actuator 208.

By changing the position of the transmission region 206b through the use of the first actuator 208 and by moving the second reflection mirror 212, the incident location of the reference beam on the first lens 216 may be changed.

This process is repeatedly performed as long as a current reference beam generated in accordance with the mechanical movements of the iris 206 and the second reflection mirror 212 has the incident location distinguishable from that of the previously generated reference beams in order to satisfy the angular selectivity. That is, the neighboring incident locations on the first lens 216 should be spaced apart from each other by the certain degree.

As the repetition number of this process increases, the recording density of the holographic digital data storage system also increases. Since the size of the reference beams, i.e., the size of the current reference beam and the previously generated reference beams, is greatly reduced due to the iris 206, the size of the incident location of the reference beam is also greatly reduced. Generally, the neighboring incident locations on the first lens 216 need to be spaced apart from each other by the certain degree for page separation. Therefore, greater number of different reference beams can be projected into the holographic medium 230 with the angular selectivity being satisfied. As a result, recording density of the holographic digital data storage system can be greatly increased. Thereafter, the holographic medium 230 moves linearly in order to change a recording area therein for the purpose of recording therein a larger amount of holographic digital data.

Though an incident location of a reference beam on the first lens 216 can be altered by changing the position of the second reflection mirror 212 while maintaining the transmission region 206b of the iris 206 at a predetermined position in the preferred embodiment of the present invention as mentioned above, it is also possible that the incident location of the reference beam on the first lens 216 can be changed by altering the position of the transmission region 206b while fixing the second reflection mirror 212 at a certain position. In such case, the incident location of the reference beam on the first lens 216 is varied by moving the transmission region 206b to record an interference pattern in a certain portion of the holographic medium 230. After the interference pattern is recorded in the certain portion of the holographic medium 230, the second reflection mirror 212 is moved to another position. And then the incident location of the reference beam on the first lens 216 is varied by moving the transmission region 206b until another interference pattern is recorded in the certain portion of the holographic medium 230. Through this process, the recording density of the holographic digital storage system can be also increased.

Though the incident location of a reference beam on the first lens 216 is altered by changing the position of the transmission region 206b of the iris 206 by way of driving the first actuator 208 connected to the iris 206 in the preferred embodiment of the present invention, it is also possible that the incident location of the reference beam on the first lens 216 is changed by moving the iris 206 and the first reflection mirror 210, with the second actuator 214 being connected to the first reflection mirror 210 instead of the second reflection mirror 212. In such case, the first reflection mirror 210 is moved with an incident angle of the reduced reference beam toward the first reflection mirror 210 being unchanged.

Referring to Fig. 5, there is provided a drawing for describing two reference beams projecting onto the first lens 216 and the angular selectivity which should be satisfied between the two reference beams in accordance with the preferred embodiment of the present invention. In the drawing, it is assumed for simplicity that two neighboring reference beams are projected on the first lens 216 such that the centers of the two reference beams are disposed on a diametral line O'D'.

A first reduced reference beam is projected into a first incident location on the first lens 216 by changing, e.g., the positions of the iris 206 and the second reflection mirror 212. A second reduced reference beam is projected into a second incident location on the first lens 216 by also changing, e.g., the positions of the iris 206 and the second reflection mirror 212.

Suppose that *∠a'* and *∠b'* are similar to those of Fig. 2, the difference |*∠a' - ∠b'* | should satisfy the angular selectivity so that one page is distinguished from another.

As the size of the reference beam is reduced, the size of the incident location is reduced. Therefore, more reduced reference beams having different incident location can be projected into the first lens 216, with the angular selectivity being satisfied.

Therefore, the present invention is capable of increasing recording density of the holographic digital data storage system by reducing the size of the reference beam through the use of the iris 206 and varying the incident location of the reference beam on the first lens 216 by changing, e.g., the positions of the iris 206 and the second reflection mirror 212.

While the invention has been shown and described with respect to the preferred embodiment, it will be understood by those skilled in the art that various changes and modifications may be made without departing from the scope of the invention as defined in the following claims.

## Claims

1. A volume holographic digital data storage system comprising:
a light source for generating a laser beam;
a beam splitter for separating the laser beam into a signal beam and a reference beam;
a spatial light modulator for modulating the signal beam into binary pixel data on a page-by-page basis based on data inputted from outside;
a beam selecting means for transmitting a selected portion of the reference beam to thereby provide a reduced reference beam;
a lens for deflecting the reduced reference beam into a storage medium; and
a reflecting means for reflecting the reduced reference beam received from the beam selecting means toward an incident location on the lens.

2. The system of claim 1, wherein the beam selecting means includes:
an iris having a transmission region for transmitting only the selected portion of the reference beam, thereby providing the reduced reference beam and a non-transmission region for absorbing or reflecting the remainder portion of the reference beam; and
a first actuator for changing the position of the transmission region of the iris to change the incident location.

3. The system of claim 2, wherein the reflecting means includes:
a first reflection mirror for reflecting the reduced reference beam received from the iris; and
a second reflection mirror for reflecting the reduced reference beam received from the first reflection mirror toward the lens.

4. The system of claim 3, further comprising a second actuator for altering a position of the second reflection mirror.

5. The system of claim 4, wherein the first actuator moves the iris on a two-dimensional plane, to which the proceeding direction of the reduced reference beam toward the first reflection mirror is perpendicular, and the second actuator moves the second reflection mirror with an incident angle of the reduced reference beam toward the second reflection mirror being unchanged.

6. The system of claim 3, further comprising a second actuator for altering a position of the first reflection mirror.
